Europäisches Patentamt

**European Patent Office**

Office européen des brevets

(11) Publication number: **0 413 591 A1**

## EUROPEAN PATENT APPLICATION

(21) Application number: **90309034.8**

(22) Date of filing: **17.08.90**

(51) Int. Cl.5: **C09J 7/02, C09J 133/02, C09J 133/06, D06N 7/06, B32B 7/12**

(30) Priority: **18.08.89 GB 8918912**
**08.03.90 GB 9005215**

(43) Date of publication of application:
**20.02.91 Bulletin 91/08**

(84) Designated Contracting States:
**BE DE DK ES FR GB IT NL SE**

(71) Applicant: **ALLIED COLLOIDS LIMITED**
**P.O. Box 38 Low Moor**
**Bradford West Yorkshire, BD12 0JZ(GB)**

(72) Inventor: **Clarke, John B.**
**10 Smithy Lane**
**Wilsden, Bradford, West Yorkshire(GB)**

(74) Representative: **Lawrence, Peter Robin Broughton et al**
**GILL JENNINGS & EVERY 53-64 Chancery Lane**
**London WC2A 1HN(GB)**

(54) **Adhesive materials and their production.**

(57) Pre-pasted wall coverings and other pre-pasted sheet materials are formed by applying a wet coating of an oil-in-water, alkali sensitive polymer and the polymer is converted to a soluble or swellable adhesive form by applying alkali to the wet coating, and the wet coating is dried. The polymer and alkali can be sprayed simultaneously through separate spray orifices but preferably they are applied sequentially, with the polymer preferably being applied by ink jet printing as a discontinuous coating followed by application of alkali.

## ADHESIVE MATERIALS AND THEIR PRODUCTION

This invention relates to the provision of a water-activatable adhesive coating on a sheet substrate such as a wall covering. Such products are frequently referred to as prepasted wallcoverings.

Various ways are known for forming such coatings on sheet substrates. It might be thought that the easiest way would be by applying an aqueous solution of the adhesive, and then drying it. Unfortunately this is not practicable since the coating needs to have a significant coating weight but the aqueous solution will necessarily have to have a very low solids content (as otherwise it will have an unacceptably high viscosity) and so the use of an aqueous solution results in thin coatings and in the needs to evaporate a large amount of water.

The traditional method has therefore involved dusting starch on to the substrate, generally after wetting the substrate. Unfortunately this process suffers from three significant disadvantages. First, the dusting process can create a health hazard for plant operatives. Second, the dusting must, in practice, follow any process of decorative printing on the opposite surface of the substrate whereas industry would generally prefer to be able to apply decorative printing after forming the prepaste coating. Third, it is necessary to have a rather high coating weight of starch in order to obtain adequate adhesion but, at these high coating weights, there is poor stripability of, for instance, the adhered wallcovering from a wall.

Another method of applying the prepaste is by use of an oil-in-water emulsion of a polymer that is non swellable in water but soluble or swellable in alkali. This emulsion, in its non-swollen form, is applied (for instance by a knife coating technique) as a layer on to the substrate and the layer is dried, and a separate dry layer of alkali is applied. It is necessary to protect the substrate from direct contact with the dried alkali layer since many substrates are liable to be discoloured or otherwise damaged by direct contact with the alkali. When the composite layer is wetted by water, the alkali dissolves and merges into the emulsion layer, and so activates that polymer by converting it to a dissolved or swollen state. Unfortunately the need to apply and dry a polymer coating and then apply and dry an alkali coating is inconvenient and it can be difficult to ensure uniform activation of the polymer during use, and so the the process has not been widely adopted.

A liquid phase process that is widely used involves application of a reverse phase dispersion of polymer particles in oil or other water immiscible liquid, followed by evaporation of this liquid. Although the process can be operated to give very good results, it suffers from the disadvantage that it requires the evaporation of significant amounts of the water immiscible liquid, and this can be environmentally undesirable.

It would be desirable to devise a more convenient way of forming the prepaste that avoided the use of organic solvents and that gave a prepaste of uniform good qualities.

According to the invention, a dry water-activatable adhesive coating is formed on a sheet substrate by applying to the substrate a coating of an oil-in-water emulsion of a polymer that is non-swellable in the aqueous phase of the emulsion but that is convertible by contact with alkali to a water-soluble or swellable form that is adhesive in the presence of water, and contacting the polymer with aqueous alkali and thereby converting the polymer to the soluble or swellable form, characterised in that the emulsion is applied to the substrate as a wet coating and the contact with the aqueous alkali is effected during the formation of the wet coating or in the wet coating, and the wet coating is subsequently dried.

The process has a number of advantages. Because the polymer is applied as an oil-in-water emulsion, its application can be carried out easily without any environmental problems and, in particular, the process does not invole the volatilisation of large quantities of organic solvent. The use of an alkali swellable or soluble emulsion means that high coating weights can be achieved using low fluidity compositions.

Because the contact of the polymer with alkali is conducted within the wet coating, it is easy to achieve substantially uniform interaction between the alkali and the emulsion both through the depth of the coating and over the entire area of the coating. The apparatus that is used can be very simple and economic because the emulsion and alkali can either be applied in a single application stage or in closely adjacent application stages and only one drying stage is required after the application of the alkali and emulsion.

In brief, the process avoids the solvent recovery problems of known reverse phase systems and it avoids the need for two separate coatings stations and two separate ovens as in the known oil-in-water emulsion systems and gives a product that can have excellent adhesive properties.

It is essential that the alkali contacts the polymer while the coating is still wet, because of the easier permeation that this gives of the alkali through the polymer coating. However, it is not essential that all the polymer should be in its soluble or swellable form in the dried coating and so it is permissible for the polymer to be only partially converted before drying is complete. Thus final conversion of the polymer to its soluble or swellable form will occur when the dried coating is rewetted with water for use as adhesive. Preferably however the polymer is fully converted to its soluble or swellable form before the drying of the wet coating is complete and usually it is wholly or partially converted before drying starts. In particular it is preferred to have substantially complete neutralisation before drying as this produces a coating having higher heat resistance which may be important during not only drying but also subsequent treatments of the sheet substrate.

The emulsion and the alkali may be applied to the substrate substantially simultaneously, in which event conversion of the polymer to the soluble or swellable form may have occured even before formation of the wet coating. Alternatively, the emulsion and alkali are applied sequentially in which event reaction occurs within the wet coating. Although some combinations of alkali and substrate permit direct contact of the substrate with alkali (without yellowing or other damage to the substrate) it is generally preferred to prevent direct contact of the alkali with the substrate and so if sequential application is being conducted it is usually preferred to apply the emulsion first and then to apply the alkali onto the wet emulsion coating.

When the polymer and alkali are applied substantially simulataneously, this is achieved preferably by spraying the emulsion and alkali onto the sheet substrate at the same time but through separate spray orifices.

It is preferable for some mixing of the polymer emulsion and aqueous alkali sprays to occur, to form a mixed spray, before this is collected on the substrate. Thus the polymer may be wholly or partially converted to soluble or swellable form in the wet coating or even before it reaches the coating. As in the other process, reaction with alkali may be completed in the wet coating or after rewetting. Preferably the mixing of the sprays is as thorough as conveniently possible before the sprayed material is coated on to the substrate, but it is adequate for incomplete mixing to occur. This application by simultaneously spraying is advantageous because it is a single stage coating process in that the emulsion and the aqueous alkali are sprayed simultaneously, but separately, in a single operation.

It is necessary that the alkali and emulsion are not mixed before spraying, since this would cause viscosity problems and potential blockages of the orifices.

The aqueous alkali and polymer emulsion may be sprayed from separate spray bars or other spraying heads but which are directed so that the sprays from each are substantially co-extensive, so as to maximise mixing of the sprays before contacting the substrate. Alternatively the polymer and emulsion may be sprayed from the same spraying device provided this is divided internally to keep them separate until after spraying from the orifices.

The orifices and the construction of the spraying devices are preferably such as to generate small particle size droplets, so as to maximise the rate of mixing of alkali with polymer emulsion. Generally it is preferred that the average particle size of each spray droplet is below $100\mu m$, most preferably below $50\mu m$ and often below $20\mu m$.

The process is best carried out on a continuous length of substrate for example, by moving the substrate relative to the spray orifices while spraying the emulsion and the liquid, with the spray orifices positioned so as to give substantially uniform distribution of each liquid across the width of the substrate. Thus generally one or more spray bars extend across the entire width of the substrate, the substrate moves underneath the spray bars and the polymer emulsion and the alkali are each ejected through orifices arranged substantially uniformly across the width of the substrate.

When the emulsion and alkali are being applied sequentially, the emulsion can be applied by spraying. However, spraying of polymer emulsions inevitably incurs the risk of some of the sprayed particles migrating away from the desired location and so a particular advantage of the sequential methods is that the polymer can be applied by a non spraying technique. Suitable non-spraying coating techniques include for example, roll coating, knife coating or printing. Another advantage is that it is easy to select the application technique so as to give either a substantially continuous layer or a discontinuous layer.

It is particularly preferred that the emulsion is applied as a discontinuous coating, because this avoids a problem which can arise in the preparation of pre-paste wall coverings where the opposite face of the substrate is coated with an impermeable substance, for example, PVC, that may have to be cured during the process. If the adhesive is a continuous coating it also is relatively impermeable, and then solvent or plasticiser in the substrate or in the PVC cannot easily escape and this can cause blistering of the PVC and other problems on curing. Wallcoverings having a discontinuous prepaste coating are described in our application "Adhesive Materials and their Production" filed toady (reference 60/3050).

To apply a discontinuous layer of emulsion, the emulsion is preferably applied in the form of a pattern of lines or dots. In order to apply the emulsion as a series of lines, it may be extruded onto the sheet substrate by any suitable printing or extrusion means. Preferably, however, the adhesive is applied as a series of dots. This can be achieved by, for example, spraying or various known printing techniques.

Preferably, the dots or other discontinuous coating of adhesive are applied by ink jet printing since we have surprisingly found that this technique is especially suited to the rheology that is conveniently possessed by the emulsion. Various types of ink jet printing can be used.

In the process known as the Continuous Ink Jet process, pressurised fluid is broken up into droplets that are emitted from capillaries as a continuous stream. After emission, these droplets can be selectively charged and deflected to differing degrees so that they can be directed to the desired location by charged plates. An example is in EP 0287373.

In the process known as the Drop-on-Demand process, a multi nozzle head comprises a series of jet capillaries which can be arranged into any suitable printing module and to which fluid is supplied. The capillaries are opened and closed to emit drops in the desired pattern on to the sheet substrate. An example is in EP 0260929.

Typically the ink jet printing technique will be used to form dots that can have dimensions of 0.02 to 4mm, often 0.1mm to 3mm and preferably approximately 2mm, with spacing between the dots of from 0.5 to 6mm. The emulsions used will generally have a low viscosity (10-100, preferably 20-30, cps being typical) and a polymer content of 10 to 60%, often about 30% by weight. Generally the melt flow temperature (MFT) of the emulsion should be above 15°C, preferably above 25°C and most preferably above 30°C.

A typical jet printer will have approximately 5 jets per centimetre. Thus, typically there will be from 1 to 10 capillary jets per centimetre, and preferably from around 3 to 7, per cm, typically with diameters of 0.2 to 0.7mm.

Application of the subsequent layer of alkali is preferably by any non-contact method, for example spraying an aqueous solution of the alkali. Alternatively, the aqueous alkali can be applied by a non-spraying technique, preferably ink-jet printing. Preferably the aqueous alkali is printed in dots that are superposed the dots of emulsion, e.g., by ink jet printing. Preferably there is a dot of alkali on substantially every dot of emulsion and preferably none of the alkali is printed direct on to the substrate.

The process is generally conducted continuously with a continuous substrate being moved past a jet printer or other means for applying the emulsion and then past means for applying the alkali (for example, by spraying or printing).

The application of the polymer and the alkali, either sequentially or simultaneously, is conducted while the substrate is moving past (generally beneath) the application means at a relatively fast rate, typically 50 to 300 metres per minute, and the combined wet coating then has to be dried. Initial drying can be into the atmosphere, for instance with the assistance of heaters, but some or all of the drying is generally conducted by passing the wet coated substrate through a suitale oven or other drying apparatus of conventional type.

The polymer emulsion is preferably made by emulsion polymerisation of a blend of monomers that is insoluble in water at pH 7 but soluble in aqueous alkali. The monomers are preferably ethylenically unsaturated monomers and will include an anionic ethylenically unsaturated monomer that is in the free acid form when in the emulsion but which, when in the alkali salt form, results in the polymer being soluble or swellable in water. The anionic monomer is preferably methacrylic acid, but other ethylenically unsaturated carboxylic monomers such as acrylic acid can be used.

The anionic monomer is usually blended with a water insoluble monomer such as ethyl acrylate or other alkyl (meth) acrylates, acrylonitrile, styrene, vinyl acetate or other monomer of the type conventionally used in polymer-in-water emulsion polymerisation.

It is particularly preferred that the polymer should be an associative polymer. Oil-in-water emulsions of associative polymers are well known and are described in EP 0216479 and in the prior art referred to in that, and the use of such polymers as wallcovering adhesives is described in EP 0214760. Thus it is particularly preferred to use the oil-in-water emulsion polymers described in those specifications, and reference should be made to them for a full description of suitable associative polymers.

Preferred polymers are those in which the associative monomer is an ethylenically unsaturated monomer (for instance an acrylic ester, acrylamide or, preferably, allyl ether) in which the substituent has a C8 to 30, generally C10 to 24, hydrophobe connected to the unsaturated group, preferably by a polyethoxy chain of at least 2, and usually at least 5 and often at least 10 ethoxy groups. The hydrophobe is generally alkyl or alkaryl, eg stearyl or nonylphenyl.

The polymer can be linear, in which event the neutralised polymer will generally be soluble in water, or it can be cross linked, in which event the neutralised polymer will be swellable in water.

The alkali can be any material that will neutralise the emulsion polymer and convert it to soluble or swellable form. It can be supplied as a gas (for instance ammonia) but is preferably supplied as an aqueous solution of for instance smmonia or an alkali metal compound, generally of sodium, for example sodium carbonate, sodium metasilicate or sodium hydroxide or other alkaline alkali metal salts such as potassium pyrophosphate.

Instead of using a monomeric alkali, a water soluble cationic polymer can be used as the alkali, and this can be advantageous as it minimises the risk of yellowing or otherwise damaging the substrate by contact with inorganic alkali.

Suitable cationic polymers are made from water soluble monomers such as dialkylaminoalkyl (meth) acrylates, especially dimethylaminoethyl (meth) acrylate, and their quaternary or acid salts, dialkylaminoalkyl (meth) acrylamides and their quaternary or acid salts for instance methacrylamidopropyl trimethylammonium chloride and Mannich products such as quaternised dimethylaminomethylacrylamides, and monomers such as diallyl dimethylammonium chloride. They may be homopolymers or copolymers, generally with acrylamide. Polyethyleneimines and polyamine epichlorohydrin are also suitable.

The polymerisation conditions for such cationic polymers are preferably such that the polymer has a relatively low molecular weight so that it is water soluble and does not form a considerably viscous solution. Solution polymerisation in water is the most preferred form. The resultant molecular weight may be from 20,000 to 5,000,000 and preferably from 100,000 to 1,000,000.

The substrate can be any sheet material on to which the adhesive coating is to be applied and so can be, for instance, a metallised foil, hessian, a polyvinyl chloride composite, a non-woven or a paper substrate. Altough the process can be used for the production of various products, it is particularly designed for use with a substrate that is a wallcovering with the result that the product of the process is a prepasted wallcovering.

After application of the emulsion and alkali as a wet coating, and optionally after allowing the wet coating to stand for a short while to permit mixing of the components and solubilisation or swelling of the polymer, the coating is then dried, for instance by passing the substrate through an oven.

Typical coating weights are 2 to 15, often 4 to 10, grams neutralised polymer per square metre of paper or other wallcovering substrate.

The coated substrate may be subjected to conventional processes before the spraying or during or after the drying. For instance the substrate may be pre-printed or post-printed. It may be provided with a foamable polymeric layer and foaming may be caused during or after the drying. When the prepaste is discontinuous, the substrate can have an impermeable caoting on it sopposite surface without incurring the blistering problems that this can otherwise cause with a continuous prepaste film.

When it is desired to adhere the substrate to, for instance, a wall or other surface, the dried coating can be wetted with water, and this will result in solubilisation or swelling of the coating, so as to form an adhesive coating on the substrate. This can then be hung on the wall, or otherwise adhered, in conventional manner.

The following are examples.

## Example 1

A 30% polymer emulsion in water is formed by oil-in-water polymerisation as described in EP 0216479 from a stearyl ethoxylate of allyl ether, methacrylic acid and ethyl acrylate. This emulsion is supplied to one spray bar. A 10% aqueous solution of sodium carbonate is supplied to another spray bar positioned close to the first.

Each spray bar extends across the width of wallcovering substrate that is passed continuously beneath the spray bars at up to 200 metres per minute. The emulsion and aqueous alkali are sprayed through the spray bars, which are angled towards the substrate so that the sprayed areas from the two spray bars are substantially co-extensive.

Approximately equal volumes of the emulsion and aqueous solution are sprayed to give a wet coating having a dry weight of 6 grams per square metre. The substrate is then passed through an oven to dry the coating.

## Example 2

The emulsion of example 1 is supplied to a drop-on-demand jet printer wherein the capillaries are extended across the width of a continuous wallcovering substrate that is passed continuously beneath the printer at a rate of up to 200 metres per minute. The capillaries in the printer are positioned at regular intervals, with 12 capillaries per 2.5 centimetres (1 inch) and have a diameter of about 0.6mm.

The emulsion is printed in a uniform manner across the entire width of the wallcovering and this is followed by the application in the same way using a jet printer of a 10% aqueous solution of dimethylaminoethyl acrylate-acrylamide copolymer directly on top of the printed dots of the polymer emulsion.

Approximately equal volumes of the emulsion and aqueous solution are applied to give a dry coating weight of 6 grams per square metre. The substrate then travels thorugh, and is dried in, a hot air oven.

**Claims**

1. A process for forming a dry water activatable adhesive coating on a sheet substrate comprising applying to the substrate a coating of an oil-in-water emulsion of a polymer that is non-swellable in the aqueous phase of the emulsion but that is convertible by contact with alkali to a water swellable form that is adhesive in the presence of water, and contacting the polymer with alkali thereby converting the polymer to soluble or swellable form, characterised in that the emulsion is applied to the substrate as a wet coating and the contact with alkali is effected during the formation of the wet coating or in the wet coating, and the wet coating is subsequently dried.

2. A process according to claim 1 in which the coated substrate is a pre-pasted wall covering.

3. A process according to claim 1 or claim 2 in which the polymer is a copolymer of ethylenically unsaturated monomers comprising of methacrylic acid and water insoluble ethylenically unsaturated monomer preferably alkyl (meth) acrylate.

4. A process according to any preceding claim in which the polymer is a polymer of ethylenically unsaturated monomers comprising monomer having a C8-30 hydrophobic group connected to an unsaturated carbon atom of the monomer.

5. A process according to any preceding claim in which the polymer is substantially completely converted to the soluble or swellable form before the coating is dried.

6. A process according to any preceding claim in which the emulsion and aqueous alkali are sprayed through orifices to form a mixed spray and the mixed spray is collected on the substrate as the wet coating.

7. A process according to any of claims 1 to 5 in which the emulsion is applied as a wet coating and the alkali is then applied to the wet coating of the emulsion.

8. A process according to claim 7 in which the emulsion is applied by a non-spraying technique and the alkali is then applied by a non-contact technique.

9. A process according to claim 7 or claim 8 in which the emulsion is applied by ink jet printing.

10. A process according to claim 9 in which the alkali is applied by ink jet printing substantially coextensively on to the wet printed deposits of emulsion.

11. A process according to any preceding claim in which the resultant coating is discontinuous.

12. A process according to any preceding claim in which the alkali is a water-soluble cationic polymer.

## DOCUMENTS CONSIDERED TO BE RELEVANT

EP 90309034.8

| Category | Citation of document with indication, where appropriate, of relevant passages | Relevant to claim | CLASSIFICATION OF THE APPLICATION (Int. Cl.5) |
|---|---|---|---|
| D,X | EP - A1 - 0 214 760 (ALLIED COLLOIDS LIMITED) * Claims; examples * | 1-5,7, 8,12 | C 09 J     7/02 C 09 J 133/02 C 09 J 133/06 D 06 N     7/06 B 32 B     7/12 |
| X | GB - A - 2 054 628 (SCOTT BADER COMPANY) * Claims; example 4 * | 1-5,7, 8,12 | |
| D,A | EP - A1 - 0 216 479 (ALLIED COLLOIDS LIMITED) * Claims; page 13, lines 10-14; page 18, lines 19-21 * | 1-5,7, 8,12 | |
| A | EP - A1 - 0 159 132 (ALLIED COLLIODS LIMITED) * Claims; page 4 * | 1-5,7, 8,12 | |

TECHNICAL FIELDS SEARCHED (Int. Cl.5)

C 09 J
D 06 N
B 32 B
B 41 J

The present search report has been drawn up for all claims

| Place of search | Date of completion of the search | Examiner |
|---|---|---|
| VIENNA | 23-11-1990 | BÖHM |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
-------------------------------------------------------------------
& : member of the same patent family, corresponding document

EPO FORM 1503 03.82 (P0401)